(19) Europäisches Patentamt
European Patent Office
Office européen des brevets

(11) EP 1 512 723 B1

(12) **EUROPEAN PATENT SPECIFICATION**

(45) Date of publication and mention of the grant of the patent:
**14.11.2007 Bulletin 2007/46**

(51) Int Cl.:
***C08L 69/00*** *(2006.01)* ***C08K 5/54*** *(2006.01)*
***G02B 6/00*** *(2006.01)* ***G02B 1/04*** *(2006.01)*

(21) Application number: **04019506.7**

(22) Date of filing: **17.08.2004**

(54) **Aromatic polycarbonate resin pellets for light guide plate, light guide plate, method for producing light guide plate and surface light source unit using the same**

Presslinge aus aromatischem Polycarbonatharz für Lichtleiterplatte, Lichtleiterplatte, Verfahren zur Herstellung einer Lichtleiterplatte und Oberflächenlichtquelle welche diese benutzt.

Granules de résine de polycarbonate aromatique pour plaque de guidage lumineux, procédé de fabrication d'une plaque de guidage lumineux et source lumineuse de surface la contenant

(84) Designated Contracting States:
**DE FR GB**

(30) Priority: **02.09.2003 JP 2003310703**

(43) Date of publication of application:
**09.03.2005 Bulletin 2005/10**

(73) Proprietor: **MITSUBISHI ENGINEERING-PLASTICS CORPORATION**
**Tokyo (JP)**

(72) Inventors:
- **Maruyama, Hiroyoshi**
  **Mitsubishi Eng.-Plastics Corp.**
  **Hiratsuka-shi, Kanagawa-ken (JP)**
- **Kurokawa, Haruhiko**
  **Mitsubishi Eng.-Plastics Corp.**
  **Hiratsuka-shi, Kanagawa-ken (JP)**

(74) Representative: **HOFFMANN EITLE**
**Patent- und Rechtsanwälte**
**Arabellastrasse 4**
**81925 München (DE)**

(56) References cited:

| | |
|---|---|
| **EP-A- 0 410 425** | **EP-A- 0 615 996** |
| **WO-A-02/29447** | **WO-A-02/37148** |
| **US-A- 5 502 153** | **US-A1- 2001 041 759** |

- **PATENT ABSTRACTS OF JAPAN vol. 2002, no. 09, 4 September 2002 (2002-09-04) & JP 2002 156511 A (IDEMITSU PETROCHEM CO LTD), 31 May 2002 (2002-05-31)**
- **PATENT ABSTRACTS OF JAPAN vol. 0134, no. 85 (M-887), 6 November 1989 (1989-11-06) & JP 1 192528 A (MITSUBISHI GAS CHEM CO INC; others: 01), 2 August 1989 (1989-08-02)**
- **PATENT ABSTRACTS OF JAPAN vol. 0171, no. 31 (C-1036), 18 March 1993 (1993-03-18) & JP 4 306227 A (TEIJIN CHEM LTD), 29 October 1992 (1992-10-29)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

**Description**

BACKGROUND OF THE INVENTION

The present invention relates to aromatic polycarbonate resin pellets for light guide plate, and a light guide plate comprising the aromatic polycarbonate resin pellets, and more particularly, to a light guide plate which is excellent in mechanical properties, thermal properties, electric properties and weather resistance, and especially excellent in light transmittance, luminance, and luminance uniformity ratio, and aromatic polycarbonate resin pellet suitable as a raw material of the light guide plate.

Liquid crystal displays used in personal computers, portable telephones, PDA, etc., include a built-in surface light source unit device in order to achieve reduction in thickness and weight, power saving, high luminance and high definition. The surface light source device is constituted of a light source and a light guide plate. The light guide plate is usually a transparent plate-shaped molded member with a wedge-shaped cross section having a uniformly inclined surface. Conventional light guide plates have been molded from resin materials such as polymethyl methacrylate (PMMA). However, in recent years, equipments such as personal computers, portable telephones and PDA undergo considerable heat generation inside thereof, so that there is such an increasing tendency that aromatic polycarbonate resin materials having a high heat resistance are used instead of the PMMA resins.

However, the aromatic polycarbonate resins have a low light transmittance as compared to that of the PMMA resins irrespective of excellent mechanical properties, thermal properties, electric properties and weather resistance thereof. Therefore, when such aromatic polycarbonate resins are used as a raw material of a light guide plate for surface light source unit, there arises such a problem that the resultant surface light source unit tends to be deteriorated in luminance.

To solve the above problem, there is known the method using as a raw material of the light guide plate, aromatic polycarbonate resins in which substances capable of enhancing a luminance of the surface light source unit, such as acrylic resins, e.g., PMMA, and/or alicyclic epoxy resins, are blended (Japanese Patent Application Laid-open No. 11-158364(1999)). However, the light guide plate made of the above aromatic polycarbonate resin composition tends to undergo white turbidity when adding the acrylic resins thereto, so that it may be difficult to sufficiently improve a light transmittance and luminance thereof. Further, even though the alicyclic epoxy compounds are added to the aromatic polycarbonate resins, the resultant light guide plate cannot be sufficiently improved in these properties.

In addition, there is also known the method using as a raw material of the light guide plate, a polycarbonate resin composition composed of a copolymerized polyester carbonate having aliphatic segments, and aromatic polycarbonate which composition is improved in mechanical strength and fluidity (Japanese Patent Application Laid-open No. 2001-215336). The surface light source unit including a light guide plate made of such a polycarbonate resin composition is well improved in luminance. However, since the polycarbonate resin composition is insufficient in heat resistance, the light guide plate made of such a composition also tends to be deteriorated in heat resistance.

Besides, there is known the light guide plate made of an aromatic polycarbonate resin composition containing 100 parts by mass of an aromatic polycarbonate resin and 0.001 to 1 part by mass of the other thermoplastic resin such as PMMA in which the difference in refractive index between the aromatic polycarbonate resin and the other thermoplastic resin is not less than 0.001, and the ratio ((X)/(Y)) of a 320 nm spectral transmittance (X) to a 633 nm spectral transmittance (Y) thereof is not less than 0.5 as measured with respect to a 2 mm-thick sample plate of the composition. However, the above conventional light guide plate also tends to undergo white turbidity upon adding an acrylic resin thereto and fail to show sufficiently enhanced light transmittance and luminance.

SUMMARY OF THE INVENTION

An object of the present invention is to provide a light guide plate having excellent light transmittance, luminance and luminance uniformity ratio; aromatic polycarbonate resin pellets preferably used for production of the light guide plate; a process for producing the light guide plate; and a surface light source unit using the light guide plate.

As a result of the present inventors earnest study to attain the above aim, it has been found that by noticing dusts mixed in aromatic polycarbonate resin pellets owing to raw aromatic polycarbonate resins or a molding process therefor, and by using as a raw material of the light guide plate, aromatic polycarbonate resin pellets which are controlled in the number of mixed dusts having a particle size near to a wavelength range of visible light, the obtained surface light source unit using such a light guide plate is excellent in light transmittance, luminance as well as luminance uniformity ratio. The present invention has been attained on the basis of this finding.

In the first aspect of the present invention, there is provided aromatic polycarbonate resin pellets for light guide plate, which contain dusts having a particle size of 0.5 to 1.0 $\mu$m in an amount of not more than 50,000 particles/g, and dusts having a particle size of more than 1.0 $\mu$m in an amount of not more than 3,000 particles/g, and which pellets contain a luminance modifier in an amount of 0.01 to 1 part by weight based on 100 parts by weight of the aromatic

polycarbonate resin.

In the second aspect of the present invention, there is provided a light guide plate comprising an aromatic polycarbonate resin which contains dusts having a particle size of 0.5 to 1.0 μm in an amount of not more than 50,000 particles/g, and dusts having a particle size of more than 1.0 μm in an amount of not more than 3,000 particles/g.

In the third aspect of the present invention, there is provided a process for producing the above light guide plate comprising the step of molding the above aromatic polycarbonate resin pellets for light guide plate.

In the fourth aspect of the present invention, there is provided a surface light source unit comprising the above light guide plate and a light source.

Further aspects of the present invention can be derived from the appended claims.

## BRIEF DESCRIPTION OF THE DRAWINGS

Fig. 1 is a schematic view of a surface light source unit of a back light type.
Fig. 2 is a schematic view of a surface light source unit of a front light type.

## DETAILED DESCRIPTION OF THE INVENTION

The present invention is described in detail below.

First, the aromatic polycarbonate resin pellets for light guide plate according to the present invention are explained. The aromatic polycarbonate resin used as a raw material of the aromatic polycarbonate resin pellets for light guide plate is a polymer or copolymer obtained by reacting a dihydroxydiaryl compound with a carbonate precursor such as phosgene or carbonic acid diesters. Typical examples of the aromatic polycarbonate resin may include polycarbonate resins produced from 2,2-bis(4-hydroxyphenyl)propane (hereinafter referred to as "bisphenol A").

Examples of the raw dihydroxydiaryl compound may include, in addition to bisphenol A, bis(hydroxyaryl)alkanes such as bis(4-hydroxydiphenyl)methane, 1,1-bis(4-hydroxyphenyl)ethane, 2,2-bis(4-hydroxydiphenyl)butane, 2,2-bis(4-hydroxyphenyl)octane, bis(4-hydroxyphenyl)phenylmethane, 2,2-bis(4-hydroxy-3-methylphenyl)propane, 1,1-bis(4-hydroxy-3-tert-butylphenyl)propane, 2,2-bis(4-hydroxy-3-bromophenyl)propane, 2,2-bis(4-hydroxy-3,5-dibromophenyl) propane and 2,2-bis(4-hydroxy-3,5-dichlorophenyl)propane; bis(hydroxyaryl)cycloalkanes such as 1,1-bis(4-hydroxyphenyl)cyclohexane; dihydroxydiaryl ethers such as 4,4'-dihydroxydiphenyl ether and 4,4'-dihydroxy-3,3'-dimethyldiphenyl ether; dihydroxydiaryl sulfides such as 4,4'-dihydroxydiphenyl sulfide and 4,4'-dihydroxy-3,3'-dimethyldiphenyl sulfide; dihydroxydiaryl sulfoxides such as 4,4'-dihydroxydiphenyl sulfoxide and 4,4'-dihydroxy-3,3'-dimethyldiphenyl sulfoxide; and dihydroxydiaryl sulfones such as 4,4'-dihydroxydiphenyl sulfone and 4,4'-dihydroxy-3,3'-dimethyldiphenyl sulfone. These dihydroxydiaryl compounds may be used singly or in the form of a mixture of any two or more thereof. Also, the dihydroxydiaryl compounds may be used in the form of a mixture with piperazine, dipiperidyl, hydroquinone, resorcin, 4,4'-dihydroxydiphenyl, etc.

Examples of the carbonate precursor to be reacted with the dihydroxydiaryl compound may include phosgene, diaryl carbonates such as diphenyl carbonate and ditolyl carbonate; and dialkyl carbonates such as dimethyl carbonate and diethyl carbonate. Of these carbonate precursors, preferred are phosgene and diphenyl carbonate.

The method for producing the aromatic polycarbonate resin is not particularly restricted, and there may be used any suitable known methods such as interfacial reaction method using phosgene and transesterification reaction method using carbonic acid diesters. Since the resin used as a molding material for producing the light guide plate is usually in the form of pellets, the powdered or flake-like aromatic polycarbonate obtained by the above methods may be further formed into pellets upon use.

The aromatic polycarbonate resin used as a raw material of the aromatic polycarbonate resin pellets for light guide plate according to the present invention has a viscosity-average molecular weight of usually 10,000 to 30,000, preferably 12,000 to 28,000, more preferably 15,000 to 24,000. When the viscosity-average molecular weight of the aromatic polycarbonate resin is less than 10,000, the light guide plate produced from the pellets thereof tends to be deteriorated in rigidity, and, therefore, tends to become unpractical. On the other hand, when the viscosity-average molecular weight of the aromatic polycarbonate resin is more than 30,000, the resin tends to be deteriorated in fluidity, so that it may be difficult to injection-mold such a resin. Meanwhile, the term "viscosity-average molecular weight (Mv)" used in the present invention means the value calculated from an intrinsic viscosity [η] of a methylene chloride solution of the resin according to the Schnell's viscosity formula as described later.

The aromatic polycarbonate resin pellets for light guide plate according to the present invention contain dusts having a particle size of 0.5 to 1.0 μm in an amount of not more than 50,000 particles/g, preferably not more than 30,000 particles/g, and contain dusts having a particle size of more than 1.0 μm in an amount of not more than 3,000 particles/g, preferably not more than 2,000 particles/g. Thus, in the aromatic polycarbonate resin pellets for light guide plate according

to the present invention, since the number of dusts contained therein which have a particle size near to the wavelength range (350 to 800 nm) of visible light is limited to the above-specified ranges, the light guide plate molded from such aromatic polycarbonate resin pellets can exhibit a high light transmittance, a high average luminance and a high luminance uniformity ratio.

When the content of dusts having a particle size of 0.5 to 1.0 μm in the aromatic polycarbonate resin pellets for light guide plate is more than 50,000 particles/g, the aromatic polycarbonate resin pellets tend to be deteriorated in light transmittance, average luminance and luminance uniformity ratio. In addition, when the content of dusts having a particle size of more than 1.0 μm in the aromatic polycarbonate resin pellets is more than 3,000 particles/g, the aromatic polycarbonate resin pellets also tend to be deteriorated in light transmittance, average luminance and luminance uniformity ratio. Although the content of the dusts in the pellets is preferably as small as possible, the aromatic polycarbonate resin pellets can be preferably used as a raw material of the light guide plate as long as the content of dusts therein lies within the above specified ranges. Meanwhile, the definitions as to the dusts, the method of measuring the number of dusts and the method of controlling the number of dusts used in the present invention are described in detail later.

In the process for producing the aromatic polycarbonate resin pellets for light guide plate according to the present invention, polycarbonate resin particles are usually melted and kneaded, if required, after blending additives as explained below therein, and then formed into pellets. At this time, since it is required to control the content of dusts in the pellets to the above-specified ranges, care should be fully taken about materials, equipments used as well as working environments upon blending the additives and upon the pelletization process.

Next, the light guide plate of the present invention is explained. The light guide plate of the present invention comprises an aromatic polycarbonate resin, and contains dusts having a particle size of 0.5 to 1.0 μm in an amount of not more than 50,000 particles/g, preferably not more than 30,000 particles/g, and contains dusts having a particle size of more than 1.0 μm in an amount of not more than 3,000 particles/g, preferably not more than 2,000 particles/g. When the content of dusts having a particle size of 0.5 to 1.0 μm in the light guide plate is more than 50,000 particles/g, the obtained light guide plate tends to be deteriorated in light transmittance, average luminance and luminance uniformity ratio. In addition, when the content of dusts having a particle size of more than 1.0 μm in the light guide plate is more than 3,000 particles/g, the obtained light guide plate also tends to be deteriorated in light transmittance, average luminance and luminance uniformity ratio. Although the content of the dusts in the light guide plate is preferably as small as possible, the light guide plate is practically usable as long as the content of dusts therein lies within the above specified ranges.

The process for producing the light guide plate is not particularly restricted, and the light guide plate may be produced from an aromatic polycarbonate resin that is well controlled in content of dusts therein, for example, by preferable known methods, usually by injection-molding method. In particular, in the process for producing the light guide plate according to the present invention, there are preferably used the aromatic polycarbonate resin pellets containing dusts having a particle size of 0.5 to 1.0 μm in an amount of not more than 50,000 particles/g and containing dusts having a particle size of more than 1.0 μm in an amount of not more than 3,000 particles/g. In the above process, there are more preferably used the aromatic polycarbonate resin pallets containing dusts having a particle size of 0.5 to 1.0 μm in an amount of not more than 30,000 particles/g, and containing dusts having a particle size of more than 1.0 μm in an amount of 2,000 particles/g.

The shape of the light guide plate according to the present invention is not particularly restricted, and may be either a flat plate shape or a curved plate shape having a lens effect, depending upon the objects and applications thereof. The light guide plate is preferably a tapered wedge shape having an inclined surface. In the more preferred embodiment of the present invention, the wedge-shaped light guide plate may have such a structure in which prism-shaped irregular patterns are formed on the inclined surface. Such irregular patterns are formed by transferring irregularities provided on a part of surface of a mold onto the inclined surface of the light guide plate upon injection molding thereof. From the standpoint of convenience, the irregular patterns to be transferred onto the inclined surface of the light guide plate are preferably provided on a core insert as a part of the mold.

The dusts contained in the aromatic polycarbonate resin pellets and the light guide plate according to the present invention generally include substances derived from impurities contained in raw materials for production of the aromatic polycarbonate resin or secondary materials therefor, contaminants mixed therein from environments and equipments used in the resin production process, pelletization process and light guide plate molding process, crosslinked products of polycarbonates produced due to local overheating upon production of the polymers and/or upon the molding process, burnt wastes, etc.

The number of dusts contained in the aromatic polycarbonate resin pellets and the light guide plate may be controlled, for example, by appropriately combining the following known methods with each other:

1) Cleaning a series of environments for production, transportation and preservation of the aromatic polycarbonate resin pellets and the light guide plate;
2) Using raw materials and/or secondary materials having a less content of dusts;
3) Inactivating portions contacting with the aimed products and eliminating portions where the products tend to be

retained or stayed, by using reactors, precision equipments, melt-kneading apparatuses, molding machines, conduits, transportation equipments, etc., whose inner surface is made of special alloys;

4) Removing dusts from the raw materials or resins by a filter fitted in reactors, precision equipments, melt-kneading apparatuses, etc.;

5) Preventing dusts from being mixed therein from outside, e.g., from reactors, melt-kneading apparatuses, conduits, transportation equipments, etc., by fitting a filter therein;

6) Inhibiting the generation of dusts such as crosslinked products and burnt wastes, by controlling reaction conditions, melt-kneading conditions or molding conditions;

7) Inhibiting the generation of dusts such as crosslinked products and burnt wastes, by blowing an inert gas into reactors, melt-kneading apparatuses and molding machines;

8) Inhibiting the generation of dusts such as crosslinked products and burnt wastes, by blending antioxidants or heat stabilizers in the resins; and

9) Removing dusts by dissolving resins in a suitable solvent and subjecting the resultant solution to filtration and purification.

The light guide plate of the present invention may also contain a luminance modifier in order to further enhance the luminance and the luminance uniformity ratio thereof. In addition, when the luminance modifier is blended in the aromatic polycarbonate resin pellets for light guide plate, there can be provided a good raw material of the light guide plate which is capable of further enhancing a luminance and a luminance uniformity ratio of the obtained light guide plate. The "luminance modifier" used herein means a substance having a refractive index lower by 0.01 or more than that of the aromatic polycarbonate resin. The luminance modifier is not particularly restricted as long as the modifier has an excellent compatibility with the aromatic polycarbonate resin, exerts no adverse influences on transparency, thermal properties and mechanical properties of the aromatic polycarbonate, and exhibits a sufficient effect of enhancing the luminance. Examples of the luminance modifier may include polyorganosiloxane compounds, paraffin waxes, and polyalkylene glycols and aliphatic acid esters thereof.

The above polyorganosiloxane compounds are preferably those compounds containing a phenyl group at least in a side chain thereof and having a branched siloxane structure. The polyorganosiloxane compounds may be used in the form of a single compound or a mixture of these compounds. In the case where the polyorganosiloxane compounds are in the form of a mixture thereof, polyorganosiloxane having a phenyl group at least in a side chain thereof may be used in combination with polyorganosiloxane having at least a branched siloxane structure.

In addition, the above polyorganosiloxane compounds have a dynamic viscosity of usually 1 to 200 cSt, preferably 5 to 100 cSt, more preferably 10 to 50 cSt as measured at 25°C. When the 25°C dynamic viscosity of the polyorganosiloxane compounds is too small, the amount of gases generated upon molding the light guide plate is increased, resulting in molding defects due to the gases such as, for example, unfilling, burning and failure of pattern transfer. On the other hand, when the 25°C dynamic viscosity of the polyorganosiloxane compounds is more than 200 cSt, it is not possible to obtain a sufficient effect of improving a hue and transmittance of the resultant aromatic polycarbonate resin composition.

The polyorganosiloxane compounds may be readily produced by ordinary organic reaction methods or may be commercially available products. Specific examples of the preferred polyorganosiloxane compounds may include compounds represented by the following general formula (1):

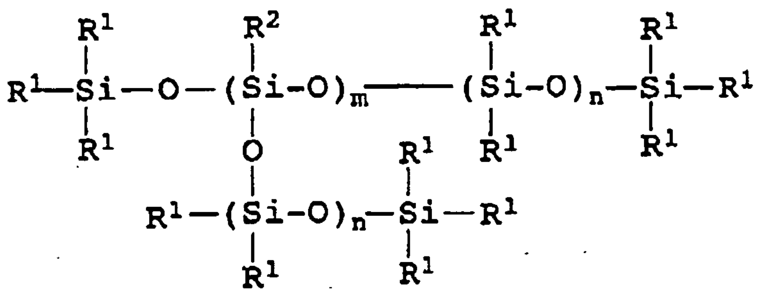

(1)

wherein $R^1$ groups are independently a hydrogen atom, $C_1$ to $C_{20}$ alkyl or $C_6$ to $C_{20}$ aryl; $R^2$ is phenyl; m is an integer of not less than 1; and n is an integer of not less than 0.

The amount of the polyorganosiloxane compounds used is usually 0.01 to 1 part by weight, preferably 0.02 to 0.5 part by weight, more preferably 0.04 to 0.3 part by weight based on 100 parts by weight of the aromatic polycarbonate resin. When the amount of the polyorganosiloxane compounds used is too small, the effect of improving the luminance

tends to be insufficient. On the other hand, when the amount of the polyorganosiloxane compounds used is too large, the amount of gases generated upon molding the light guide plate is increased, sometimes resulting in molding defects, burning and failure of pattern transfer.

Examples of the above paraffin waxes may include saturated aliphatic hydrocarbons containing as main components, n-paraffin and/or i-paraffin, and low-molecular polyethylenes containing an end hydroxyl group and having a wax-like appearance. The above saturated aliphatic hydrocarbons have a molecular weight of usually 300 to 1,500, preferably 300 to 1,000 as measured by GPC method. The above paraffin waxes may be readily produced by ordinary organic reaction methods, or may be commercially available products.

The amount of the paraffin waxes used is usually 0.01 to 1 part by weight, preferably 0.02 to 0.7 part by weight, more preferably 0.04 to 0.5 part by weight based on 100 parts by weight of the aromatic polycarbonate resin. When the amount of the paraffin waxes used is too small, the effect of improving the luminance tends to be insufficient. On the other hand, when the amount of the paraffin waxes used is too large, the amount of gases generated upon molding the light guide plate is increased, sometimes resulting in molding defects, burning and failure of pattern transfer.

The above polyalkylene glycols and aliphatic acid esters thereof are compounds represented by the following general formula (2), and may be readily produced by ordinary organic reaction methods.

$$X-O-(CHR-CH_2-O)_q-Y \qquad (2)$$

wherein R is a hydrogen atom or $C_1$ to $C_3$ alkyl; X and Y are respectively a hydrogen atom or $C_2$ to $C_{23}$ aliphatic acyl and may be the same or different from each other; and q is an integer of 10 to 400.

In the above general formula (2), the polymerization degree q is usually 10 to 400, preferably 15 to 200, more preferably 20 to 100. When the polymerization degree q is less than 10, the amount of gases generated upon molding the light guide plate is increased, sometimes resulting in molding defects, burning and failure of pattern transfer. On the other hand, when the polymerization degree q is more than 400, it is not possible to obtain a sufficient effect of improving a hue and transmittance of the aromatic polycarbonate.

Specific examples of the above polyalkylene glycols may include polyethylene glycol as a compound represented by the above general formula (2) in which R is a hydrogen atom, and polypropylene glycol as a compound represented by the above general formula (2) in which R is methyl. Also, specific examples of the above aliphatic acid esters of polyalkylene glycols may include polyethylene glycol stearate as a compound represented by the above general formula (2) in which R is a hydrogen atom and X and Y are respectively $C_{18}$ aliphatic acyl (i.e., stearoyl: $C_{17}H_{35}CO$-), polypropylene glycol stearate as a compound represented by the above general formula (2) in which R is methyl and X and Y are respectively stearoyl, polyethylene glycol behenate as a compound represented by the above general formula (2) in which R is a hydrogen atom and X and Y are respectively $C_{22}$ aliphatic acyl, and polypropylene glycol behenate as a compound represented by the above general formula (2) in which R is methyl and X and Y are respectively $C_{22}$ aliphatic acyl. The use of these compounds is preferred because of availability. The above polyalkylene glycols and aliphatic acid esters thereof may be used singly or in the combination of any two or more thereof. Meanwhile, when the molding temperature used upon production of the light guide plate is as high as more than 300°C, the use of the aliphatic acid esters of polyalkylene glycols is preferred from the standpoint of good heat resistance thereof.

The amount of the above polyalkylene glycols and aliphatic acid esters thereof used is usually 0.01 to 1 part by weight, preferably 0.05 to 0.8 part by weight, more preferably 0.08 to 0.4 part by weight based on 100 parts by weight of the aromatic polycarbonate resin. When the amount of the polyalkylene glycols and aliphatic acid esters thereof used is too small, it is not possible to obtain a sufficient effect of improving the luminance. On the other hand, when the amount of the polyalkylene glycols and aliphatic acid esters thereof used is too large, the aromatic polycarbonate resin tends to undergo white turbidity, resulting in deteriorated transmittance thereof.

The aromatic polycarbonate resin pellets for light guide plate and the light guide plate according to the present invention preferably contain an antioxidant in order to improve a light transmittance and hue thereof and prevent the generation of dusts such as burnt wastes. Examples of the antioxidant may include phosphorus-based antioxidants such as phosphites and phosphates.

Examples of the phosphites may include triesters, diesters and monoesters of phosphorous acid, such as triphenyl phosphite, trisnonylphenyl phosphite, tris(2,4-di-tert-butylphenyl)phosphite, trinonyl phosphite, tridecyl phosphite, trioctyl phosphite, trioctadecyl phosphite, distearyl pentaerythritol diphosphite, tricyclohexyl phosphite, monobutyldiphenyl phosphite, monooctydiphenyl phosphite, distearyl pentaerythritol diphosphite, bis(2,4-di-tert-butylphenyl)pentaerythritol phosphite, bis(2,6-di-tert-butyl-4-methylphenyl)pentaerythritol phosphite, bis(2,4-dicumylphenyl)pentaerythritol phosphite and 2,2-methylenebis(4,6-di-tert-butylphenyl)octyl phosphite.

Examples of the phosphates may include trimethyl phosphate, triethyl phosphate, tributyl phosphate, trioctyl

phosphate, triphenyl phosphate, tricresyl phosphate, tris(nonylphenyl)phosphate, 2-ethylphenyldiphenyl phosphate and tetrakis(2,4-di-tert-butylphenyl)-4,4-diphenylene phosphonite.

Of these phosphorus-based antioxidants, preferred are distearyl pentaerythritol diphosphite, bis(2,4-di-tert-butylphenyl)pentaerythritol phosphite, bis(2,6-di-tert-butyl-4-methylphenyl)pentaerythritol phosphite and tris(2,4-di-tert-butylphenyl)phosphite, more preferred are pentaerythritol-based antioxidants, and especially preferred is bis(2,6-di-tert-butyl-4-methylphenyl)pentaerythritol phosphite. Meanwhile, these phosphorus-based antioxidants may be used singly or in the combination of any two or more thereof. The amount of the phosphorus-based antioxidant used is usually 0.005 to 0.2 part by weight, preferably 0.01 to 0.1 part by weight based on 100 parts by weight of the aromatic polycarbonate resin.

Further, the aromatic polycarbonate resin pellets for light guide plate and the light guide plate of the present invention may also contain other thermoplastic resins and various additives ordinarily used for production of the light guide plate such as flame retardants, impact modifiers, slip agents, lubricants, mold release agents, antifogging agents and colorants, unless the addition thereof adversely affects the objects of the present invention.

The surface light source unit of the present invention includes the light guide plate of the present invention and a light source. For example, an edged surface light source unit constituted from a wedge-shaped light guide plate and a light source fitted onto a larger-thickness end portion of the light guide plate can be applied to portable telephones, personal digital assistants, cameras, clocks or watches, note-type personal computers, displays, illumination equipments, signals, tale lamps for automobiles, heating power indicators for electronic ovens, etc. As the light source provided in the surface light source unit, there may be used fluorescent lamps as well as self-luminescent materials or equipments such as cold cathode fluorescent lamps, LED and organic EL.

When the surface light source unit of the present invention is applied to liquid crystal displays, the displays may be either a back light type or a front light type. As examples of the surface light source unit, Fig. 1 shows a schematic view of a surface light source unit of a back light type, and Fig. 2 shows a schematic view of a surface light source unit of a front light type.

In the surface light source unit of a back light type as shown in Fig. 1, a reflection member (4) is disposed in an opposed relation to a first surface (11) of a light guide plate (1). Further, a liquid crystal display element (panel) (3) is disposed in an opposed relation to a second surface (12) of the light guide plate (1). Light emitted from a light source (2) enters into the light guide plate (1) from an end portion thereof, impinges against irregularities formed on the first surface (11), thereby producing a scattered light. The scattered light is emitted from the first surface (11) of the light guide plate, and reflected on the reflection member (4). The reflected light enters again into the light guide plate from the first surface (11), passed through the second surface (12) and irradiated onto the liquid crystal display element (3). Between the liquid crystal display element (3) and the second surface (12), there may be disposed, for example, a diffusion sheet (5) or a prism sheet (not shown). Meanwhile, when the light guide plate is provided with no irregularities, a plurality of prism sheets may be disposed to orient the light in specific directions.

In the surface light source unit of a front light type as shown in Fig. 2, the liquid crystal display element (3) is disposed in an opposed relation to the second surface (12). Light emitted from the light source (2) enters into the light guide plate (1) from an end portion thereof, impinges against irregularities formed on the first surface (11), thereby producing a scattered light. The scattered light is then emitted from the second surface (12), and passed through a phase difference film (or polarizing film) (6) and then through the liquid crystal display element (3). The light emitted from the liquid crystal display element (3) is reflected on the reflection member (4) disposed outside of the liquid crystal display element (3), passed again through the liquid crystal display element (3) and then through the phase difference film (or polarizing film) (6), further passed through the light guide plate (1), and emitted from the first surface (11). The thus emitted light is recognized as an image formed on the liquid crystal display element (3). Usually, a reflection preventing layer (not shown) is provided on the second surface (12).

The aromatic polycarbonate resin pellets for light guide plate according to the present invention are well controlled in content of dusts having specific particle sizes and, therefore, can be suitably used as a raw material of a light guide plate exhibiting a high total light transmittance, a high luminance and a high luminance uniformity ratio. Also, the light guide plate of the present invention is well controlled in content of dusts having specific particle sizes. Therefore, when the light guide plate is used in combination with a light source, there can be provided a surface light source unit having a high total light transmittance, a high luminance and a high luminance uniformity ratio.

## EXAMPLES

The present invention is described in more detail below by the following examples. However, these examples are only illustrative and not intended to limit the scope of the present invention. First, the raw materials used in the following examples and comparative examples are explained.

Aromatic polycarbonate resin:

Flakes of poly-4,4-isopropylidenediphenylcarbonate "IUPILON H-4000F" produced by Mitsubishi Gas Chemical Company, Inc. were treated by the below-mentioned method to remove dusts therefrom, and melt-kneaded using a vented single-screw extruder with a screw diameter of 40 mm at a cylinder temperature of 250°C and then extruded therefrom to obtain strands. The thus obtained strands were cut to produce aromatic polycarbonate resin pellets for light guide plate. Meanwhile, it was confirmed that the aromatic polycarbonate resin had a viscosity-average molecular weight (Mv) of 16,000 and a refractive index ($n_D$) of 1.58 as measured at 25°C.

PC1: Flakes of "IUPILON H-4000F" were dissolved in methylene chloride to prepare a 12% resin solution. The thus obtained resin solution was successively filtered through a 5 $\mu$m-mesh filter and then through a 3 $\mu$m-mesh filter. The resin solution was further filtered through a 1 $\mu$m-mesh filter twice. The resultant filtrate was heated to evaporate and remove the solvent therefrom, thereby obtaining resin flakes. The thus obtained resin flakes were formed into pellets within a clean room.

PC2: Flakes of "IUPILON H-4000F" were dissolved in methylene chloride to prepare a 12% resin solution. The thus obtained resin solution was successively filtered through a 5 $\mu$m-mesh filter and then through a 3 $\mu$m-mesh filter. The resin solution was further filtered through a 1 $\mu$m-mesh filter. The resultant filtrate was heated to evaporate and remove the solvent therefrom, thereby obtaining resin flakes. The thus obtained resin flakes were formed into pellets within a clean room.

PC3: Flakes of "IUPILON H-4000F" were dissolved in methylene chloride to prepare a 12% resin solution. The thus obtained resin solution was successively filtered through a 5 $\mu$m-mesh filter and then through a 3 $\mu$m-mesh filter. The resultant filtrate was heated to evaporate and remove the solvent therefrom, thereby obtaining resin flakes. The thus obtained resin flakes were formed into pellets within a clean room.

PC4: Flakes of "IUPILON H-4000F" were dissolved in methylene chloride to prepare a 12% resin solution. The thus obtained resin solution was filtered through a 5 $\mu$m-mesh filter. The resultant filtrate was heated to evaporate and remove the solvent therefrom, thereby obtaining resin flakes. The thus obtained resin flakes were formed into pellets within a clean room.

PC5: Flakes of "IUPILON H-4000F" were formed into pellets within a clean room.

PC6: Flakes of "IUPILON H-4000F" were dissolved in methylene chloride to prepare a 12% resin solution. The thus obtained resin solution was filtered through a 5 $\mu$m-mesh filter. The resultant filtrate was heated to evaporate and remove the solvent therefrom, thereby obtaining resin flakes. The thus obtained resin flakes were formed into pellets within an ordinary room.

With respect to the above obtained PC1 to PC6, the amount of dusts contained in the resin flakes before pelletized, and pelletization conditions are shown together in Table 1. Meanwhile, "dusts 1" and dusts 2" described in the following Tables were determined by the below-mentioned evaluation method.

Table 1

| Kind of PC resin | Mv | Dusts 1 (0.5 to 1.0 $\mu$m) particles/g | Dusts 2 (>1.0 $\mu$m) particles/g | Environmental conditions upon production of pellets |
|---|---|---|---|---|
| PC1 | 16,000 | 3,000 | 60 | within clean room |
| PC2 | 16,000 | 10,000 | 200 | within clean room |
| PC3 | 16,000 | 25,000 | 600 | within clean room |
| PC4 | 16,000 | 35,000 | 1,000 | within clean room |
| PC5 | 16,000 | 40,000 | 1,500 | within clean room |
| PC6 | 16,000 | 35,000 | 1,000 | Ordinary environment |

Antioxidant: "ADEKASTAB AS2112" produced by Asahi Denka Co., Ltd. (phosphorus-based antioxidant: tris (2,4-di-tert-butylphenyl)phosphite)

Luminance modifier: "KF56" produced by Shin-Etsu chemical Co., Ltd. (dimethyldiphenylsiloxane (containing branched type phenylsiloxane); $n_D$ = 1.50 (25°C); dynamic viscosity: 15 cSt)

Luminance modifier: "SH556" produced by Dow Corning Toray Silicone Co., Ltd. (methylphenylsiloxane (containing branched type phenylsiloxane); $n_D$ = 1.46 (25°C); dynamic viscosity: 22 cSt)

Luminance modifier: "NKL-9520" produced by NOF Corporation (polypropylene glycol distearate (polymerization degree: 30 to 40); $n_D$ = 1.44 (25°C))

Luminance modifier: "155WAX" produced by Nippon Seiro Co., Ltd. (paraffin wax; $n_D$ = 1.43 (80°C))

In the respective examples and comparative examples, the following evaluation methods were used.

(1) Viscosity-average molecular weight:

A methylene chloride solution of a polycarbonate resin (concentration: 0.5 g/mL) was prepared, and a 25°C intrinsic viscosity [η] thereof was measured using an Ubbelohde viscometer by a volumetric method. The viscosity-average molecular weight of the resin was calculated from the thus measured value according to the following Schnell's formula:

$$[\eta] = 1.23 \times 10^{-4} \times (Mv)^{0.83}$$

(2) Dusts:

One gram of polycarbonate resin pellets or small pieces of a light guide plate were dissolved in 100 mL of methylene chloride previously filtered through a 0.05 μm-mesh filter to prepare a sample solution. The obtained sample solution was passed through a liquid particle counter manufactured by HIAC/ROYCO Inc., to measure the number of dusts contained therein by light-scattering method and light-shielding method. The dusts having a particle size of 0.5 to 1.0 μm and the dusts having a particle size of more than 1.0 μm were classified into "dusts 1" and "dusts 2", respectively, to measure the number of the respective dusts contained in 1 g of the sample. Meanwhile, if there was such a risk that the surfaces of the polycarbonate resin pellets or light guide plate before being dissolved in methylene chloride were contaminated with dusts, the polycarbonate resin pellets or light guide plate were previously subjected to ultrasonic cleaning with pure water containing dusts having a particle size of 0.5 to 1.0 μm in an amount of not more than 10 particles/g, and then dissolved in methylene chloride.

(3) Total light transmittance:

Using an injection molding machine "J50" manufactured by Japan Steel Works, Ltd., aromatic polycarbonate resin pellets for light guide plate were molded into a plate (90 mm x 50 mm x 3 mm in thickness) at a cylinder temperature of 300°C. The total light transmittance of the thus obtained plate was measured using a turbidity meter "NDH-2000 Model" manufactured by Nippon Denshoku Industries Co., Ltd.

(4) Average luminance and luminance uniformity ratio:

The light guide plate was disposed within a dark room such that its surface provided with irregular patterns faced downward, and a cold cathode fluorescent lamp was fitted onto an end face of a larger thickness portion thereof to form an edged surface light source unit of a front light type. Next, a luminance meter "TOPCON BM-7" manufactured by Topcon Corporation, was disposed 30 cm above an irregular pattern-unformed surface of the light guide plate to measure a luminance of the light guide plate. The average luminance was determined as an average of measured luminance values at total nine cross levels of 3 standards in width and 3 standards in length. Also, the luminance uniformity ratio was calculated according to the following formula:

$$\text{Luminance uniformity ratio (\%)} = (\text{minimum luminance value}/\text{maximum luminance value}) \times 100$$

Examples 1 to 4, Reference Examples 1 and 2 and Comparative Example 1 The pellets of Examples 1-4 are not within the scope of the invention:

A polycarbonate resin and a stabilizer were blended together at formulation ratios shown in Table 2 or 3, and formed into pellets under environmental conditions shown in Table 1. The thus obtained pellets were dried using a hot-air circulation-type dryer at 120°C for 5 to 7 hours. The pellets were injection-molded into a light guide plate having a size of 40 mm in width, 60 mm in length, 0.7 mm in thickness of a thin-wall portion and 0.9 mm in thickness of a thick-wall portion, and having a wedge-shaped cross section and an inclined surface provided with prism-shaped irregular patterns. The prism-shaped irregular patterns were formed using a mold having a pitch of 200 μm and a depth of 5 μm.

Specifically, the pellets were injection-molded using an injection molding machine "SODICK TR100EH" manufactured by Sodick Plastic Co., Ltd., at a mold temperature of 80°C and a cylinder temperature of 300°C. Also, the injection molding process was performed within a clean room.

The amounts of dusts in the obtained pellets and light guide plate were measured. Further, the light guide plate was subjected to measurements of average luminance and luminance uniformity ratio thereof. Still further, a plate was molded from the pellets according to the above item (3) (evaluation of total light transmittance), and the total light transmittance thereof was measured. The results are shown in Tables 2 and 3.

Table 2

| | | Examples | | | |
|---|---|---|---|---|---|
| | | 1 | 2 | 3 | 4 |
| Raw material (wt. part) | PC1 | 100 | - | - | 100 |
| | PC2 | - | 100 | - | - |
| | PC3 | - | - | 100 | - |
| | Antioxidant AS2112 | - | - | - | 0.1 |
| Pellets | Dusts 1 (particles/g) (0.5 to 1.0 μm) | 5,000 | 10,000 | 25,000 | 5,000 |
| | Dusts 2 (particles/g) (>1.0 μm) | 150 | 420 | 900 | 150 |
| Light guide plate | Dusts 1 (particles/g) (0.5 to 1.0 μm) | 17,000 | 25,000 | 40,000 | 17,000 |
| | Dusts 2 (particles/g) (>1.0 μm) | 1,200 | 1,500 | 2,500 | 1,200 |
| 3mm thickness plate | Total light transmittance (%) | 90.10 | 90.05 | 90.00 | 90.15 |
| Surface light source unit | Average luminance (cd/m$^2$) | 1,400 | 1,380 | 1,350 | 1,430 |
| | Luminance uniformity ratio (%) | 80 | 80 | 80 | 81 |

Table 3

| | | Reference Examples | | Com. Ex. |
|---|---|---|---|---|
| | | 1 | 2 | 1 |
| Raw material (wt. part) | PC4 | 100 | - | - |
| | PC5 | - | 100 | - |
| | PC6 | - | - | 100 |
| Pellets | Dusts 1 (particles/g) (0.5 to 1.0 μm) | 35,000 | 40,000 | 110,000 |
| | Dusts 2 (particles/g) (>1.0 μm) | 1,900 | 2,000 | 4,000 |
| Light guide plate | Dusts 1 (particles/g) (0.5 to 1.0 μm) | 52,000 | 55,000 | 125,000 |
| | Dusts 2 (particles/g) (>1.0 μm) | 3,500 | 4,000 | 5,500 |
| 3mm thickness plate | Total light transmittance (%) | 89.90 | 89.80 | 89.50 |
| Surface light source unit | Average luminance (cd/m$^2$) | 1,350 | 1,300 | 1,300 |
| | Luminance uniformity ratio (%) | 75 | 70 | 60 |

Examples 5 to 8 and Reference Example 3:

A polycarbonate resin, a stabilizer and a luminance modifier were blended together at formulation ratios shown in Table 4, and formed into pellets under environmental conditions shown in Table 1. The thus obtained pellets were dried using a hot-air circulation-type dryer at 120°C for 5 to 7 hours. The pellets were injection-molded into a light guide plate having a wedge-shaped cross section by the same method as defined in Example 1. The amounts of dusts in the obtained pellets and light guide plate were measured. Further, the light guide plate was subjected to measurements of average luminance and luminance uniformity ratio thereof. Still further, a plate was molded from the pellets according

to the above item (3) (evaluation of total light transmittance), and the total light transmittance thereof was measured. The results are shown in Table 4.

Table 4

| | | Example 5 | Reference Example 3 | Example 6 |
|---|---|---|---|---|
| Raw material (wt. part) | PC1 | 100 | - | 100 |
| | PC4 | - | 100 | - |
| | Antioxidant AS2112 | 0.1 | - | 0.1 |
| | Luminance modifier KF56 | 0.1 | 0.1 | - |
| | Luminance modifier SH556 | - | - | 0.1 |
| | Luminance modifier NKL-9520 | - | - | - |
| | Luminance modifier 155WAX | - | - | - |
| Pellets | Dusts 1 (particles/g) (0.5 to 1.0 μm) | 5,000 | 35,000 | 5,000 |
| | Dusts 2 (particles/g) (>1.0 μm) | 150 | 1,900 | 150 |
| Light guide plate | Dusts 1 (particles/g) (0.5 to 1.0 μm) | 17,000 | 52,000 | 17,000 |
| | Dusts 2 (particles/g) (>1.0 μm) | 1,200 | 3,500 | 1,200 |
| 3mm thickness plate | Total light transmittance (%) | 90.25 | 90.07 | 90.45 |
| Surface light source unit | Average luminance ($cd/m^2$) | 1,480 | 1,380 | 1,510 |
| | Luminance uniformity ratio (%) | 82 | 77 | 82 |

Table 4 (continued)

| | | Example 7 | Example 8 |
|---|---|---|---|
| Raw material (wt. part) | PC1 | 100 | 100 |
| | PC4 | - | - |
| | Antioxidant AS2112 | 0.1 | 0.1 |
| | Luminance modifier KF56 | - | - |
| | Luminance modifier SH556 | - | - |
| | Luminance modifier NKL-9520 | 0.1 | - |
| | Luminance modifier 155WAX | - | 0.1 |
| Pellets | Dusts 1 (particles/g) (0.5 to 1.0 μm) | 5,000 | 5,000 |
| | Dusts 2 (particles/g) (>1.0 μm) | 150 | 150 |
| Light guide plate | Dusts 1 (particles/g) (0.5 to 1.0 μm) | 17,000 | 17,000 |
| | Dusts 2 (particles/g) (>1.0 μm) | 1,200 | 1,200 |
| 3mm thickness plate | Total light transmittance (%) | 90.30 | 90.35 |
| Surface light source unit | Average luminance ($cd/m^2$) | 1,470 | 1,490 |
| | Luminance uniformity ratio (%) | 80 | 80 |

As is apparent from Tables 2 and 3, all of the light guide plates obtained in Examples 1 to 4 in which the amount of dusts contained therein was controlled within the specific range as defined by the present invention, exhibited an average luminance of not less than 1,350, in some cases, more than 1,400. Further, the luminance uniformity ratios of these light guide plates all were not less than 80%. The total light transmittances of the 3mm thickness plates were not less than 90%.

On the other hand, in Reference Example 1, since the amount of dusts contained in the light guide plate was larger than the specific range of the present invention, although the average luminance was 1,350, the luminance uniformity ratio was as low as 75%. Also, in Reference Example 2, since the amount of dusts contained in the light guide plate was larger than the specific range of the present invention, the obtained light guide plate was deteriorated in average luminance and luminance uniformity ratio. In addition, the light guide plate obtained in Comparative Example 1 was also deteriorated in both average luminance and luminance uniformity ratio.

It is preferred that the light guide plate exhibits a higher average luminance. In the measuring method used in the above Examples, the light guide plates were apparently different in luminance from each other when the difference in average luminance therebetween was 30 $cd/m^2$ or more. Further, in order to enhance a visibility of the light guide plate, it was required that the luminance uniformity ratio thereof was higher even by 1%.

In addition, as is apparent from Table 4, the light guide plates obtained in Examples 5 to 8 in which the amounts

of dusts contained therein was well controlled and the luminance modifier was added thereto, were considerably enhanced in both average luminance and luminance uniformity ratio. On the other hand, the light guide plate obtained in Reference Example 3 was improved in average luminance and luminance uniformity ratio by adding the luminance modifier thereto. However, since the amount of dusts contained in the light guide plate was larger than the specific range of the present invention, the average luminance and luminance uniformity ratio thereof was enhanced merely to a small extent as compared to those in Examples 5 to 8.

## Claims

1. Aromatic polycarbonate resin pellets for light guide plate, which pellet contain dusts having a particle size of 0.5 to 1.0 $\mu$m in an amount of not more than 50,000 particles/g, and dusts having a particle size of more than 1.0 $\mu$m in an amount of not more than 3,000 particles/g, and which pellet contain a luminance modifier in an amount of 0.01 to 1 part by weight based on 100 parts by weight of the aromatic polycarbonate resin.

2. Aromatic polycarbonate resin pellets for light guide plate according to claim 1, wherein said luminance modifier is at least one compound selected from the group consisting of polyorganosiloxane, paraffin wax, polyalkylene glycol and aliphatic acid ester of polyalkylene glycol.

3. Aromatic polycarbonate resin pellets for light guide plate according to claim 2, wherein said luminance modifier is polyorganosiloxane having a branched siloxane structure containing a phenyl group at least in a side chain thereof, and exhibiting a 25°C dynamic viscosity of 1 to 200 cSt.

4. Aromatic polycarbonate resin pellets for light guide plate according to claim 2 or 3, wherein said luminance modifier is polyorganosiloxane represented by the general formula (1):

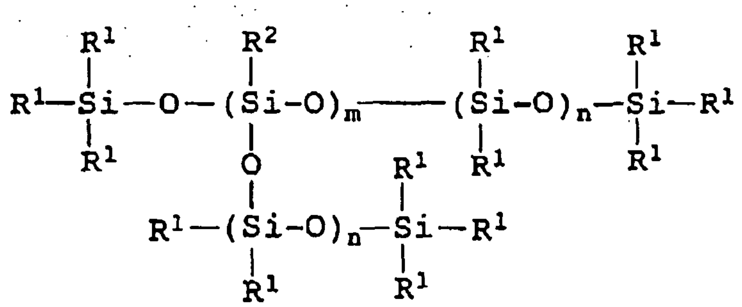

(1)

wherein $R^1$ groups are independently a hydrogen atom, $C_1$ to $C_{20}$ alkyl or $C_6$ to $C_{20}$ aryl; $R^2$ is phenyl; m is an integer of not less than 1; and n is an integer of not less than 0.

5. A light guide plate comprising an aromatic polycarbonate resin which contains dusts having a particle size of 0.5 to 1.0 $\mu$m in an amount of not more than 50,000 particles/g, and dusts having a particle size of more than 1.0 $\mu$m in an amount of not more than 3,000 particles/g.

6. A light guide plate according to claim 5, wherein said aromatic polycarbonate resin contains a luminance modifier.

7. A light guide plate according to claim 6, wherein said luminance modifier is at least one compound selected from the group consisting of polyorganosiloxane, paraffin wax, polyalkylene glycol and aliphatic acid ester of polyalkylene glycol.

8. A light guide plate according to claim 7, wherein said luminance modifier is polyorganosiloxane having a branched siloxane structure containing a phenyl group at least in a side chain thereof, and exhibiting a 25°C dynamic viscosity of 1 to 200 cSt.

9. A light guide plate according to claim 7 or 8, wherein said luminance modifier is polyorganosiloxane represented by the general formula (1):

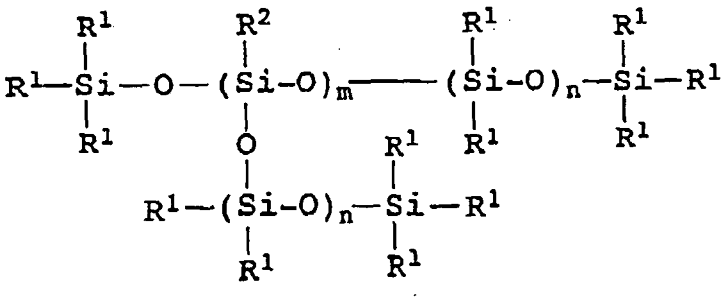 (1)

wherein $R^1$ groups are independently a hydrogen atom, $C_1$ to $C_{20}$ alkyl or $C_6$ to $C_{20}$ aryl; $R^2$ is phenyl; m is an integer of not less than 1; and n is an integer of not less than 0.

**10.** A process for producing the light guide plate as defined in any one of claims 6 to 9, comprising the step of molding the aromatic polycarbonate resin pellets for light guide plate as defined in any one of claims 1 to 4.

**11.** A process for producing the light guide plate as defined in claim 5, comprising the step of molding aromatic polycarbonate resin pellets which contain dusts having a particle size of 0.5 to 1.0 $\mu$m in an amount of not more than 50,000 particles/g, and dusts having a particle size of more than 1.0 $\mu$m in an amount of not more than 3,000 particles/g.

**12.** A surface light source unit comprising the light guide plate as defined in any one of claims 5 to 9 and a light source.

**Patentansprüche**

**1.** Pellets aus aromatischem Polycarbonatharz für Lichtleiterplatten, wobei die Pellets Stäube mit einer Partikelgröße von 0,5 bis 1,0 $\mu$m in einer Menge von nicht mehr als 50.000 Partikel/g und Stäube mit einer Partikelgröße von größer als 1,0 $\mu$m in einer Menge von nicht mehr als 3.000 Partikel/g umfassen, und worin die Pellets einen Leuchtdichtemodifizierer ("luminance modifier") in einer Menge von 0,01 bis 1 Gew.Teile, bezogen auf 100 Gew.Teile des aromatischen Polycarbonatharzes, enthalten.

**2.** Pellets aus aromatischem Polycarbonatharz für Lichtleiterplatten gemäß Anspruch 1, worin der Leuchtdichtemodifizierer zumindest eine Verbindung ist, die aus der Gruppe ausgewählt ist, die aus Polyorganosiloxanen, Paraffinwachs, Polyalkylenglycolen und aliphatischen Säureestern von Polyalkylenglycolen besteht.

**3.** Pellets aus aromatischem Polycarbonatharz für Lichtleiterplatten gemäß Anspruch 2, worin der Leuchtdichtemodifizierer ein Polyorganosiloxan mit einer verzweigten Siloxanstruktur, die eine Phenylgruppe in zumindest einer Seitenkette hiervon enthält, ist und bei 25°C eine dynamische Viskosität von 1 bis 200 cSt aufweist.

**4.** Pellets aus aromatischem Polycarbonatharz für Lichtleiterplatten gemäß Anspruch 2 oder 3, worin der Leuchtdichtemodifizierer ein durch die allgemeine Formel (1) dargestelltes Polyorganosiloxan ist:

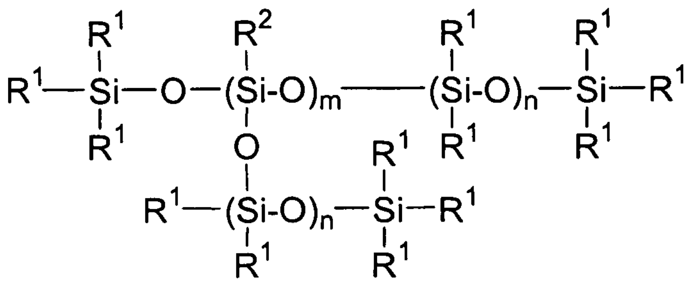 (1)

worin die $R^1$-Gruppen unabhängig aus einem Wasserstoffatom, $C_1$-$C_{20}$-Alkyl- oder $C_6$-$C_{20}$-Arylgruppen ausgewählt sind; $R^2$ Phenyl ist; m eine ganze Zahl von nicht kleiner als 1 ist; und n eine ganze Zahl von nicht kleiner als 0 ist.

**5.** Lichtleiterplatte, umfassend ein aromatisches Polycarbonatharz, das Stäube mit einer mittleren Partikelgröße von 0,5 bis 1,0 μm in einer Menge von nicht mehr als 50.000 Partikel/g und Stäube mit einer Partikelgröße von größer als 1,0 μm in einer Menge von nicht mehr als 3.000 Partikel/g enthält.

**6.** Lichtleiterplatte gemäß Anspruch 5, worin das aromatische Polycarbonatharz einen Leuchtdichtemodifizierer enthält.

**7.** Lichtleiterplatte gemäß Anspruch 6, worin der Leuchtdichtemodifizierer zumindest eine Verbindung ist, die aus der Gruppe ausgewählt ist, die aus Polyorganosiloxanen, Paraffinwachs, Polyalkylenglycolen und aliphatischen Säureestern von Polyalkylenglycolen besteht.

**8.** Lichtleiterplatte gemäß Anspruch 7, worin der Leuchtdichtemodifizierer ein Polyorganosiloxan mit einer verzweigten Siloxanstruktur, die eine Phenylgruppe in zumindest einer Seitenkette hiervon enthält, ist und bei 25°C eine dynamische Viskosität von 1 bis 200 cSt aufweist.

**9.** Lichtleiterplatte gemäß Anspruch 7 oder 8, worin der Leuchtdichtemodifizierer ein durch die allgemeine Formel (1) dargestelltes Polyorganosiloxan ist:

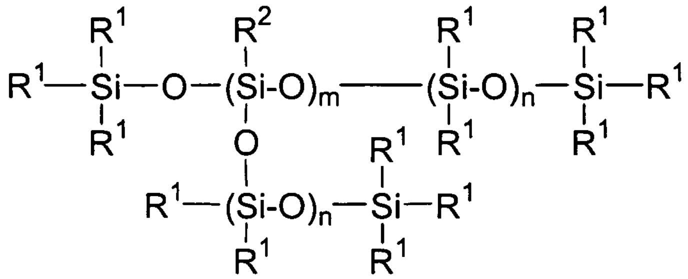

(1)

worin die $R^1$-Gruppen unabhängig aus einem Wasserstoffatom, $C_1$-$C_{20}$-Alkyl- oder $C_6$-$C_{20}$-Arylgruppen ausgewählt sind; $R^2$ Phenyl ist; m eine ganze Zahl von nicht kleiner als 1 ist; und n eine ganze Zahl von nicht kleiner als 0 ist.

**10.** Verfahren zur Herstellung einer Lichtleiterplatte gemäß irgendeinem der Ansprüche 6 bis 9, umfassend einen Schritt zum Formen der Pellets aus aromatischem Polycarbonatharz für Lichtleiterplatten gemäß irgendeinem der Ansprüche 1 bis 4.

**11.** Verfahren zur Herstellung einer Lichtleiterplatte gemäß Anspruch 5, umfassend einen Schritt zum Formen von Pellets aus aromatischem Polycarbonatharz, die Stäube mit einer Partikelgröße von 0,5 bis 1,0 μm in einer Menge von nicht mehr als 50.000 Partikel/g und Stäube mit einer Partikelgröße von größer als 1,0 μm in einer Menge von nicht mehr als 3.000 Partikel/g enthalten.

**12.** Oberflächen-Lichtquelleneinheit, umfassend die Lichtleiterplatte gemäß irgendeinem der Ansprüche 5 bis 9 und eine Lichtquelle.

**Revendications**

**1.** Granulés de résine de polycarbonate aromatique pour plaque guide d'ondes optique, lesquels granulés contiennent des poussières ayant une granulométrie de 0,5 à 1,0 μm à raison de pas plus de 50 000 particules/g, et des poussières ayant une granulométrie de plus de 1,0 μm à raison de pas plus de 3 000 particules/g, et lesquels granulés contiennent un modificateur de luminance à raison de 0,01 à 1 partie en poids pour 100 parties en poids de la résine de polycarbonate aromatique.

**2.** Granulés de résine de polycarbonate aromatique pour plaque guide d'ondes optique selon la revendication 1, dans lesquels ledit modificateur de luminance est au moins un composé choisi dans le groupe constitué par un polyorganosiloxane, une cire de paraffine, un polyalkylèneglycol et un ester d'acide aliphatique de polyalkylèneglycol.

**3.** Granulés de résine de polycarbonate aromatique pour plaque guide d'ondes optique selon la revendication 2, dans

lesquels ledit modificateur de luminance est un polyorganosiloxane ayant une structure siloxane ramifiée contenant un groupe phényle dans une de ses chaînes latérales au moins, et présentant une viscosité dynamique à 25°C de 1 à 200 cSt.

**4.** Granulés de résine de polycarbonate aromatique pour plaque guide d'ondes optique selon la revendication 2 ou 3, dans lesquels ledit modificateur de luminance est un polyorganosiloxane représenté par la formule générale (1) :

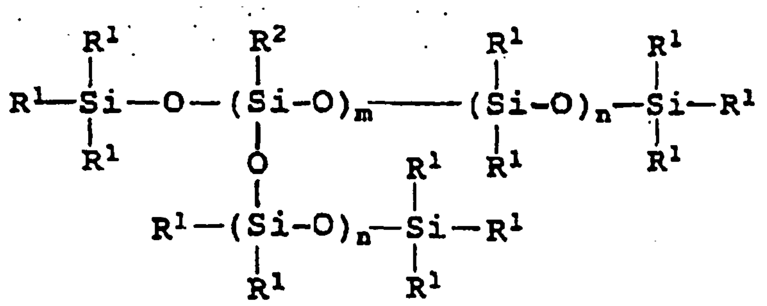

(1)

dans laquelle les groupes $R^1$ représentent indépendamment un atome d'hydrogène, ou un groupe alkyle $C_1$ à $C_{20}$ ou aryle $C_6$ à $C_{20}$ ; $R^2$ représente un groupe phényle ; m est un nombre entier non inférieur à 1 ; et n est un nombre entier non inférieur à 0.

**5.** Plaque guide d'ondes optique comprenant une résine de polycarbonate aromatique qui contient des poussières ayant une granulométrie de 0,5 à 1,0 μm à raison de pas plus de 50 000 particules/g, et des poussières ayant une granulométrie de plus de 1,0 μm à raison de pas plus de 3 000 particules/g.

**6.** Plaque guide d'ondes optique selon la revendication 5, dans laquelle ladite résine de polycarbonate aromatique contient un modificateur de luminance.

**7.** Plaque guide d'ondes optique selon la revendication 6, dans laquelle ledit modificateur de luminance est au moins un composé choisi dans le groupe constitué par un polyorganosiloxane, une cire de paraffine, un polyalkylèneglycol et un ester d'acide aliphatique de polyalkylèneglycol.

**8.** Plaque guide d'ondes optique selon la revendication 7, dans laquelle ledit modificateur de luminance est un polyorganosiloxane ayant une structure siloxane ramifiée contenant un groupe phényle dans une de ses chaînes latérales au moins, et présentant une viscosité dynamique à 25°C de 1 à 200 cSt.

**9.** Plaque guide d'ondes optique selon la revendication 7 ou 8, dans laquelle ledit modificateur de luminance est un polyorganosiloxane représenté par la formule générale (1) :

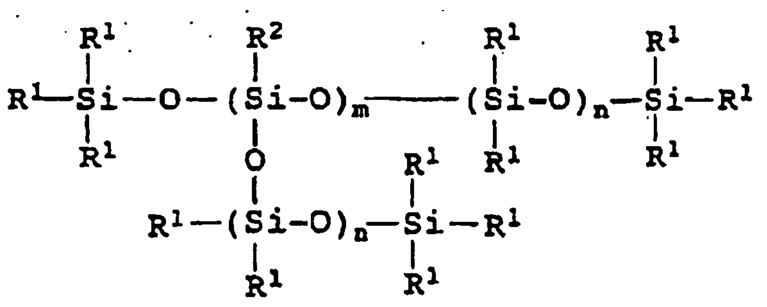

(1)

dans laquelle les groupes $R^1$ représentent indépendamment un atome d'hydrogène, ou un groupe alkyle $C_1$ à $C_{20}$ ou aryle $C_6$ à $C_{20}$ ; $R^2$ représente un groupe phényle ; m est un nombre entier non inférieur à 1 ; et n est un nombre entier non inférieur à 0.

**10.** Procédé de production de la plaque guide d'ondes optique telle qu'elle est définie dans l'une quelconque des revendications 6 à 9, comprenant l'étape de moulage des granulés de résine de polycarbonate aromatique pour plaque guide d'ondes optique tels qu'ils sont définis dans l'une quelconque des revendications 1 à 4.

**11.** Procédé de production de la plaque guide d'ondes optique telle qu'elle est définie dans revendication 5, comprenant l'étape de moulage de granulés de résine de polycarbonate aromatique qui contiennent des poussières ayant une granulométrie de 0,5 à 1,0 μm à raison de pas plus de 50 000 particules/g, et des poussières ayant une granulométrie de plus de 1,0 μm à raison de pas plus de 3 000 particules/g.

**12.** Unité de source lumineuse de surface comprenant la plaque guide d'ondes optique telle qu'elle est définie dans l'une quelconque des revendications 5 à 9 et une source lumineuse.

FIG.1

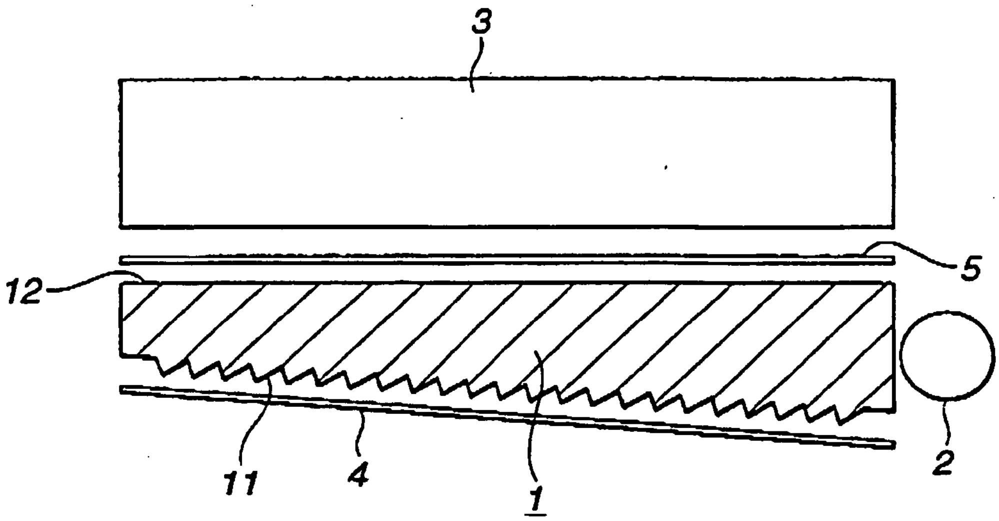


FIG.2

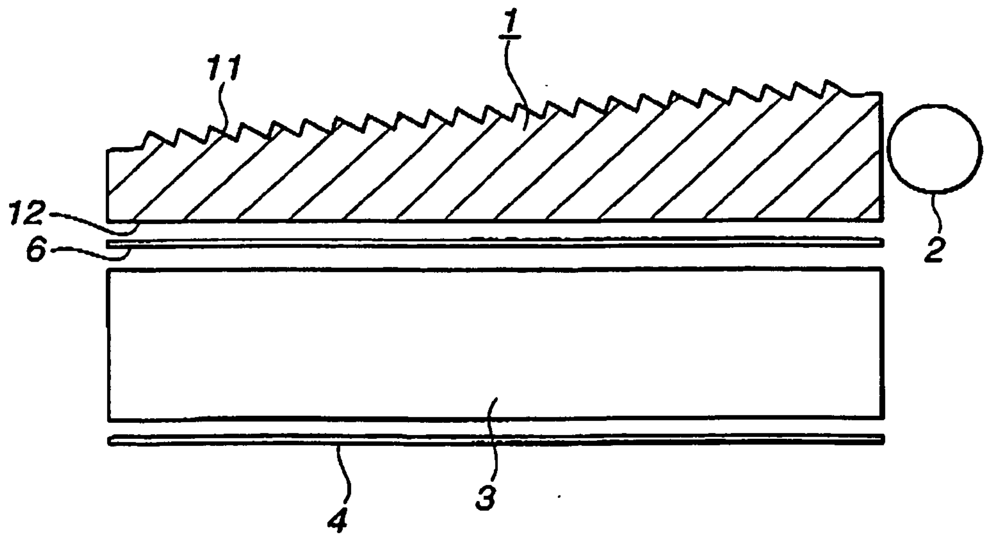

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 11158364 A
- JP 2001215336 A